Europäisches Patentamt

(19) European Patent Office

Office européen des brevets

(11) Numéro de publication: **0 027 226**

**B1**

(12) **FASCICULE DE BREVET EUROPEEN**

(45) Date de publication du fascicule du brevet: **04.01.84**

(21) Numéro de dépôt: **80106033.6**

(22) Date de dépôt: **06.10.80**

(51) Int. Cl.³: **H 04 Q 11/04,**
**H 04 Q 1/24, H 04 Q 3/24**

(54) Système de contrôle d'un réseau de connexion.

(30) Priorité: **12.10.79 FR 7925475**

(43) Date de publication de la demande:
**22.04.81 Bulletin 81/16**

(45) Mention de la délivrance du brevet:
**04.01.84 Bulletin 84/1**

(84) Etats contractants désignés:
**BE CH DE FR GB IT LI NL SE**

(56) Documents cités:
**EP - A - 0 012 642**
**FR - A - 2 256 616**
**FR - A - 2 409 651**
**US - A - 4 064 369**

**SYSTEMS TECHNOLOGY, no. 32, septembre 1979 Liverpool GB A.S. PHILIP: "The system X digital switching subsystem (DSS)", pages 5-19**
**COMMUTATION & ELECTRONIQUE, no. 57, avril 1977 Paris FR J.P. LAGER et al.: "Techniques de détection d'incidents dans un centra de transit temporel", pages 29-34**
**PROCEEDINGS OF THE IEEE, vol. 65, no. 9, septembre 1977 New York US S.R. TREVES: "Maintenance strategies for PCM circuit switching", pages 1363-1374**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Dupuis, Bernard**
**3, rue de Charnay**
**Elancourt F-78310 Maurepas (FR)**
Inventeur: **Thiaud, Jacques**
**2, rue du Maréchal de Lattre de Tassigny**
**F-78000 Versailles (FR)**

(74) Mandataire: **Weinmiller, Jürgen et al,**
**Zeppelinstrasse 63**
**D-8000 München 80 (DE)**

(56) Documents cités:
**INTERNATIONAL SWITCHING SYMPOSIUM, 11 mai 1979, session 31c Paris FR SCHREINER et al.: "Utilisation de microprocesseurs dans les systèmes de commutation temporelle à grande capacité", pages 737-744**
**INTERNATIONAL SWITCHING SYMPOSIUM, 11 mai 1979, session 40c Paris FR DUPUIS et al.: "Réseau de brassage du système E12", pages 829-833**

Système de contrôle d'un réseau de connexion

L'invention concerne un système de contrôle du réseau de connexion d'un autocommutateur commandé par un organe central programmé selon le préambule de la revendication 1. Un tel système est connu, par exemple à partir de l'article publié dans "International Switching Symposium", mai 1979, pages 829 à 833, qui évoque le contrôle du bon établissement des chemins dans un réseau de connexion temporel. Ce contrôle consiste à vérifier la bonne transmission d'échantillons numériques à travers les étages du réseau, soit sous forme passive par prélèvement d'échantillons en entrée du réseau ainsi qu'en sortie sur l'itinéraire à contrôler et par comparaison des échantillons, soit sous forme active par injection d'au moins un échantillon à une entrée, par prélèvement à une sortie et par comparaison des échantillons injectés et prélevés.

Il existe différentes variantes de réalisation permettant d'assurer ce contrôle. A titre d'exemple le brevet américain 4064369 décrit un système permettant un test actif préalable à l'établissement d'une communication bidirectionnelle par aller et retour d'un mot de continuité à partir d'une entrée du réseau via les deux chemins de sens inverse établis à travers le réseau pour cette communication et par comparaison du même mot avant et après transmission dans des agencements décentralisés de test de continuité. L'ensemble des opérations s'effectue sous le contrôle de l'horloge locale de l'autocommutateur comportant le système et ne prévoit pas le test des organes de synchronisation placés en amont des entrées du réseau pour la mise à l'heure des signaux reçus au rythme fixé par des horloges distantes sur le rythme fixé par l'horloge locale, les tests sont donc incomplets avec le système proposé.

A titre d'exemple également le brevet français 2409651 décrit un dispositif de surveillance permettant un contrôle passif des chemins établis dans un réseau de connexion temporelle par comparaison d'échantillons reçus à l'une ou l'autre des entrées avec les échantillons apparaissant à la sortie à laquelle l'entrée considérée est connectée temporellement pour la durée d'une communication. Le contrôle s'effectue en amont des organes de synchronisation; il est assuré par un bloc de contrôle passif spécialisé qui est apte à se connecter sélectivement aux différentes liaisons temporelles desservies par le réseau et qui contrôle successivement diverses liaisons une à une sur ordre de l'unité de commande centrale de l'autocommutateur qui le comporte.

A titre de dernier exemple, le brevet français 2256616 décrit un central de télécommunication qui comporte un dispositif actif de contrôle de trajet assurant avant communication d'une part l'injection de mots prédéterminés sur l'une et l'autre des deux entrées du réseau de connexion temporel du central qui sont affectées à une communication, cette injection s'effectue en amont des organes de synchronisation, d'autre part le recherche de ces mots aux deux sorties du réseau connectées temporellement aux deux entrées considérées pour la durée de communication. Les contrôles sont décentralisés.

Ces différents systèmes connus présentent un certain nombre d'inconvénients, l'un ne fonctionne qu'en synchronisme avec l'horloge de l'autocommutateur qui le comporte, ce qui implique l'adjonction d'un contrôle particulier pour les organes de synchronisation placés en amont du réseau de connexion dans l'autommutateur, les autres qui sont actifs ne permettent qu'un contrôle avant établissement des communications et ne sont pas adaptés à la détection d'erreurs en cours de communication. Dans deux des variantes décrites, les contrôles s'effectuent localement à l'aide de dispositifs dont la complexité limite l'application aux seules entrées et sorties du réseau, contrairement à ce que propose la présente invention.

Pour remédier à ces inconvénients la présente invention propose un système de contrôle du réseau de connexion temporel d'un autocommutateur commandé par un organe central programmé pour connecter entre elles des liaisons multiplex temporelles MIC entrantes et sortantes synchronisées, ledit système de contrôle assurant une vérification des chemins temporairement établis entre liaisons multiplex à travers les sous-ensembles, tels que commutateurs temporels et spatiaux, du réseau de connexion par injection d'échantillons en des points d'injection situés en entrée du réseau de connexion et par prélèvement d'échantillons en des points d'analyse, répartis et associés aux sous-ensembles.

Selon une caractéristique de l'invention le système de contrôle comporte au moins un équipement d'injection et d'échantillonnage relié à une pluralité de points d'injection et de points d'analyse positionnés en amont des circuits de synchronisation des liaisons multiplex entrantes et au moins un équipement de prélèvement d'échantillons relié à une pluralité de points d'analyse situés dans le réseau de connexion en aval des circuits de synchronisation, chacun des équipements de prélèvement ou d'injection et d'échantillonnage comportant un registre d'échanges qui reçoit, sous forme de messages via une unité de gestion programmée les ordres de prélèvement et/ou d'injection émanant de l'organe central programmé, un circuit d'adressage relié par ses entrées au registre d'échanges de l'équipement qui le comporte pour la sélection des points d'analyse et/ou d'injection reliés audit équipement, un circuit d'acquisition d'échantillon pour recueillir temporairement un échantillon prélevé en un point d'analyse sélectionné par le circuit d'adressage dudit équipement, un circuit d'émission pour transmettre tout échantillón, contenu dans le circuit d'acquisition dudit équipement, sous forme de message vers l'organe central programmé, via l'unité de gestion.

Un mode de réalisation de l'invention va être décrit à titre d'exemple à l'aide des figures annexées qui représentent:

—figure 1 un exemple de réseau de connexion auquel s'applique l'invention,

—figure 2 un diagramme d'un circuit de contrôle suivant l'invention,

—figure 3 un diagramme des principaux signaux d'horloge permettant le fonctionnement du système de contrôle,

—figure 4 un diagramme indiquant le déroulement des échanges de messages entre l'unité de gestion et ledit circuit de contrôle,

—figure 5 un mode de réalisation du circuit de prélèvement d'échantillon de la figure 2,

—figure 6 un mode de réalisation de circuit d'injection et d'échantillonnage de vois temporelles de la figure 2.

L'exemple que l'on va décrire concerne un central téléphonique à réseau de connexion temporel à commandes centralisées.

Le réseau de connexion est de type TSSST, c'est-à-dire qu'il comporte des commutateurs temporels d'entrée, suivi de trois étages de commutation spatiale et d'un étage de commutateurs temporels de sortie.

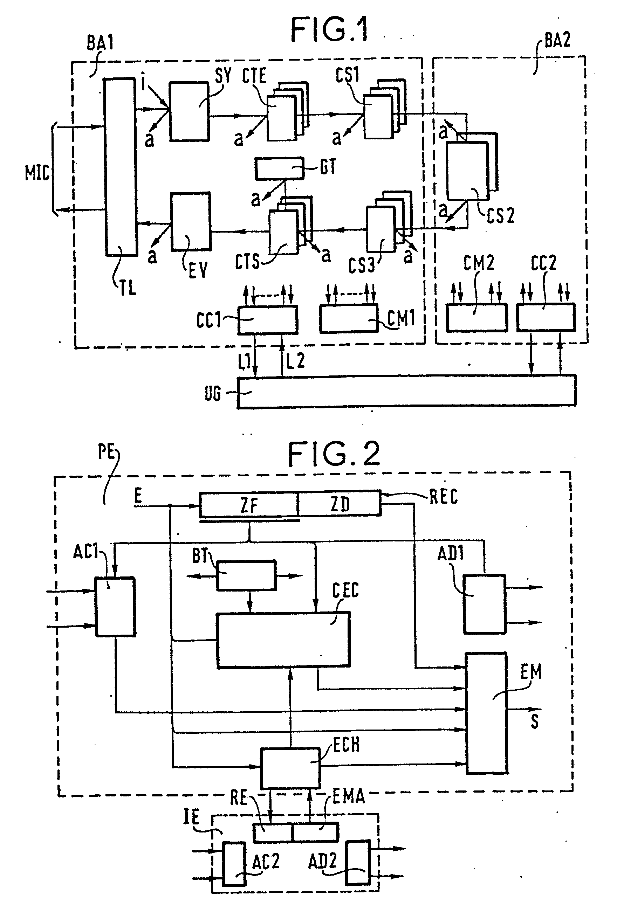

Dans l'organisation que l'on va décrire, un système de contrôle suivant l'invention est affecté à chaque bâti du réseau de connexion. On a représenté à la figure 1 deux types de bâtis BA1, BA2. Les bâtis BA1 comportent les moyens d'interface avec lex multiplex entrants et sortant (MIC), les étages temporels et deux étages spatiaux. Les bâtis BA2 comportent l'étage spatial central.

Les multiplex temporels sont par exemple des liaisons MIC à la norme européenne comportant 32 canaux de 8 éléments binaires, échantillonnés à la fréquence de 8 kHz. L'interface des liaisons MIC avec le réseau de connexion comporte un ensemble de transcodage TC effectuant la conversion du code HDB3 utilisé sur les liaisons MIC en code binaire et la conversion inverse en sortie, un dispositif de synchronisation d'entrée SY permettant de synchroniser les informations reçues sur les liaisons MIC entrantes avec l'horloge locale, et un circuit d'émission de verrouillage EV permettant d'émettre en sortie du réseau de connexion les signaux de verrouillage de trames destinés à la synchronisation des liaisons MIC sortantes. Les tonalités sont émises au niveau d'un commutateur temporel de sortie CTS par un générateur de tonalité GT.

Dans cette application on a prévu les possibilités de contrôle suivantes:

— à l'entrée du dispositif de synchronisation SY: possibilité d'analyser un échantillon (8 éléments binaires) d'une voie temporelle quelconque, ou de substituer à cet échantillon un code de contrôle connu,

— analyse d'un échantillon d'une voie de parole quelconque en divers points du réseau de connexion: entrée du commutateur temporel d'entrée CTE, entrée du commutateur spatial CS1, entrée et sortie du commutateur spatial CS2, entrée du commutateur spatial CS3, entrée du commutateur temporel de sortie CTS, sortie du générateur de tonalité GT, sortie de l'émetteur de verrouillage EV. A la figure 1, les points d'analyse sont représentés par des flèches marquées a, et le point d'injection de code connu par une flèche marquée i.

Les circuits de contrôle CC1, CC2 des différentes bâtis BA1, BA2 sont pilotés par une unité de gestion programmée UG. Une unité de gestion de ce type est décrite dans le document EP—A—0018 911. L'autocommutateur téléphonique est piloté par dex calculateurs centraux. Les commandes des calculateurs sont relayées par des unités de gestion UG. Les unités de gestion UG sont affectées à la commande du réseau de connexion par l'intermédiaire d'un périphérique de marquage. Dans la présente application, l'unité UG pilote chaque bâti du réseau de connexion par l'intermédiaire de deux circuits (figure 1):

— un circuit de marquage (CM1, CM2) qui transmet au réseau les ordres de connexion provenant des calculateurs centraux. Cette fonction ne fait pas l'objet de l'invention.

— un circuit de contrôle (CC1, CC2). Chaque circuit de contrôle est relié à l'unité UG par deux liaisons séries L1, L2 permettant chacune des échanges de message dans un sens.

Dans le mode de réalisation représenté figure 2, le circuit de contrôle comporte un équipement de prélèvement d'échantillons PE utilisé dans les bâtis BA1 et BA2, et un équipement d'injection et d'échantillonnage IE utilisé uniquement dans le bâti BA1 en entrée du dispositif de synchronisation SY.

L'équipement de prélèvement d'échantillons PE (figure 2) comporte les éléments suivants:

— un registre d'échanges REC dont l'entrée E est reliée à la liaison série venant de l'unité de gestion UG. Comme on le verra plus loin, le message provenant de l'unité UG comporte d'une part une partie affectée à l'analyse ou à l'injection d'un échantillon d'une voie de parole à l'entrée du réseau de connexion (zone ZD), et d'autre part une partie affectée à la sélection du point du réseau où est récupéré cet échantillon (zone ZF),

— un circuit d'adressage AD1 permettant de sélectionner le point d'analyse,

— un circuit d'acquisition AC1 permettant de récupérer l'échantillon à analyser à partir des divers points du réseau de connexion,

— un circuit de contrôle des échanges CEC avec l'unité de gestion UG piloté par une base de temps BT,

— un circuit d'échanges ECH permettant des échanges de messages avec un circuit d'injection et d'échantillonnage IE utilisé à l'entrée du réseau temporel,

— un circuit d'émission EM relié à la liaison d'émission série S vers l'unité de gestion.

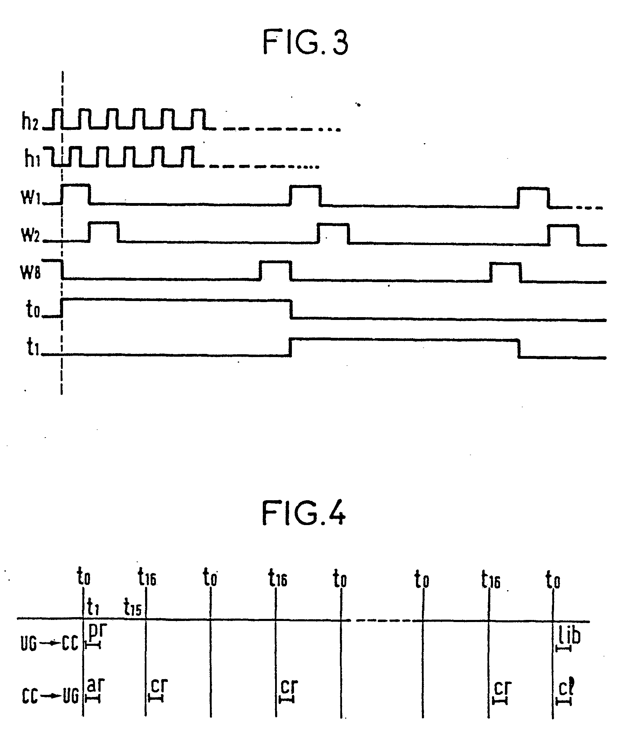

Comme on le verra plus loin, ce circuit d'émission EM est relié à l'entrée E du circuit de prélèvement d'échantillon, à la sortie du registre REC, et aux sorties des circuits AC1, CEC et ECH. Ces liaisons permettent la procédure d'échanges de messages représentés à la figure 4. Le réseau de connexion est piloté par une horloge locale qui attribué à chacune des 32 voies de parole des liaisons multiplex un créneau t0 à t31. Pour envoyer un message, l'unité de gestion émet à l'instant t0 en début de trame un signal de prise pr. En réponse le circuit CC concerné par ce message, envoie un accusé de réception ar. Ensuite en milieu de trame à l'instant t16, le circuit CC envoie à l'unité de gestion à chaque trame un compte-rendu cr concernant les données analysées. Lorsque l'unité UG décide que les données reçues sont suffisantes, elle envoie à un instant t0 suivant l'instant t16 du dernier compte-rendu un signal de libération lib. Le circuit CC répond par un signal de compte-rendu de libération cl. Le signal ar est constitué par le rebouclage direct du message de prise vers l'unité de gestion. Le signal cl est constitué par le contenu de registre REC qui est émis par le circuit EM à la réception du signal lib. Enfin le message de compte-rendu cr permet d'émettre l'échantillon reçu par le circuit AC1 ou par l'équipement IE, sous le contrôle du circuit CEC.

Les équipements d'injection et d'échantillonnage d'entrée IE comportent un registre RE et un circuit auxiliaire d'émission EMA pour les échanges de messages avec le circuit d'analyse, un circuit d'adressage AD2 et un circuit d'acquisition AC2 permettant le prélèvement ou l'injection d'échantillons à l'entrée du réseau de connexion.

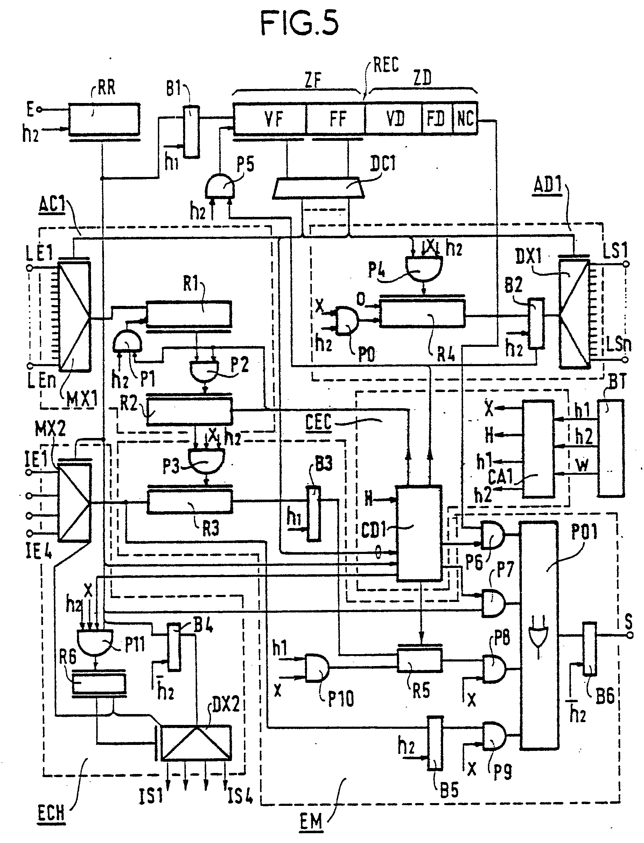

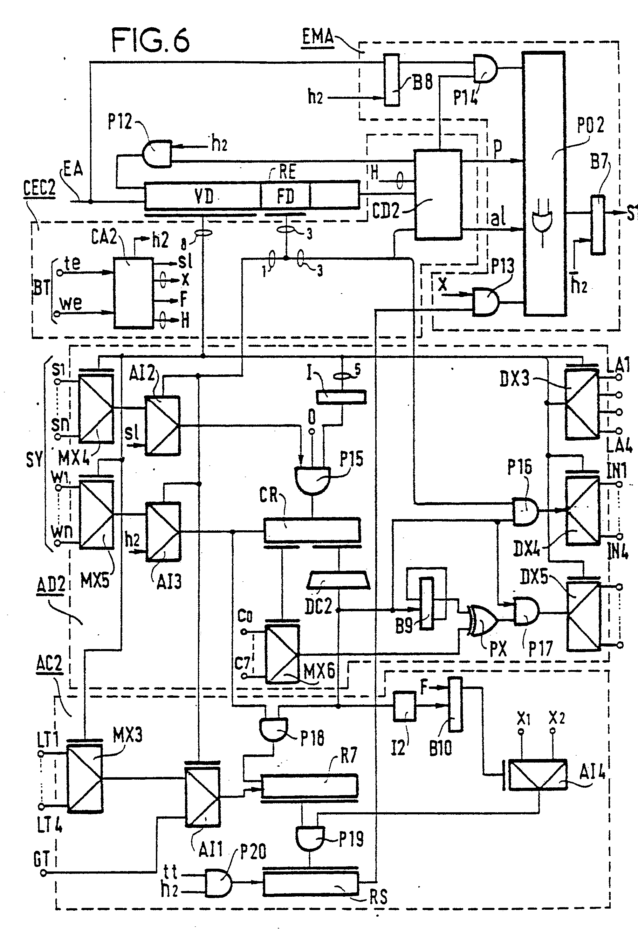

A titre d'exemple on va décrire d'une manière détaillée un équipement de prélèvement d'échantillon (figure 5) et un équipement d'injection et d'échantillonage (figure 6). Ces équipements utilisent les signaux de la base de temps locale BT représentés à la figure 3. Les signaux t indice i représentent les intervalles de temps des liaisons multiplex. Les signaux w1 à w8 représentent pour chaque voie temporelle les créneaux alloués aux 8 éléments binaires. Chacun des signaux w indice i est divisé en trois phases h0, non utilisé ici, h1 et h2.

Chacune des zones contenues dans le registre REC (ZF, ZD) comporte un code de fonction F indiquant le secteur du réseau de connexion intéressé (flèche a et i à la figure 1) ainsi que le type de contrôle actif ou passif dans le cas de la zone ZD, et un code V d'adresse de voies comportant l'adresse de la jonction contrôlée et le numéro de la voie temporelle.

L'entrée E (figure 5) est reliée à l'entrée de donnée en série d'un registre à décalage RR à trois éléments binaires dont l'entrée d'horloge est validée par le signal h2. Le message transite par ce registre, d'une part vers le registre REC par l'intermédiaire d'une bascule B1 de type D pilotée par le signal h1, et d'autre part vers le circuit d'échanges ECH (figure 2). Les parties VF et FF de la zone ZF sont reliées à un circuit de décodage DC1. Les trois premiers bits du message qui sont chargés dans le registre RR appartiennent à la zone ZD et comportent un code NC indiquant le numéro du commutateur temporel concerné par le contrôle, et le premier bit du code FD indiquant si l'équipement IE a une fonction à réaliser ou non. Ceci permet d'aiguiller directement la zone ZD vers l'auxiliaire.

Avant de décrire plus en détails les circuits des figures 5 et 6, il est bon de préciser le mode de sélection des points de contrôle et les signaux d'horloge utilisés.

Pour des besoins de défense, les bâtis sont organisés en modules, et il existe une liaison dans chaque sens entre chaque module et le système de contrôle. Les circuits de sélection AC et AD aux figures 5 et 6 comportent des multiplexeurs et des démultiplexeurs donnant accès à ces liaisons. La sélection de la jonction à contrôler est réalisée par émission d'une adresse par l'intermédiaire desdits démultiplexeurs. La sélection de la voie temporelle est faite au niveau du système lui-même qui se synchronise avec la voie temporelle à contrôler. Dans le cas du circuit de prélèvement d'échantillon PE la synchronisation est faite à l'aide de la base de temps locale, et dans le cas de l'équipement IE elle est faite par récupération de l'horloge distante. Cette récupération est faite de manière connue au niveau du dispositif de synchronisation SY de l'étage temporel entrant. Le transfert d'informations dans le système de contrôle sont faits au rythme de transfert d'éléments binaires sur des MIC c'est-à-dire à la fréquence de 2,040 MHz. On utilise pour cela les signaux h1 et h2. D'autre part les différents échanges entre les parties du système sont validés pendant des créneaux de temps déterminés respectivement au niveau du circuit de prélèvement d'échantillon et du circuit IE par des circuits cadenceurs CA1, CA2 reliés à la base de temps BT. Le circuit de contrôle des échanges CEC représenté à la figure 2 comporte le circuit cadenceur CA1 et un circuit de commande CD1. Le circuit cadenceur CA 1 émet des signaux H vers le circuit CD1 et des signaux X vers les autres parties du système: ces signaux ne seront pas décrits en détails car ils ne sont pas nécessaire pour la compréhension de l'invention, et ils sont constitués par des combinaisons logiques simples des divers signaux ti, wi, hi. Le circuit de commande CD1 qui pilote les différentes phases du traitement d'un contrôle et des échanges de message avec l'unité de gestion reçoit ces informations du circuit CA1, en sortie du décodeur DC1, et en sortie du registre RR. Ce circuit de commande CD1 comporte des bascules de mémorisation des différentes phases de ce traitement et ces échanges (traitement des zones ZD et ZF, phases de prises d'accusé de réception et de libération). Les circuits CA1 et CD1 ne seront pas décrits en détails mais leur constitution ressort clairement des indications déjà données et de la description du fonctionnement du système qui sera donné plus loin.

Le circuit AC1 (figure 5) est formé d'un multiplexeur MX1 recevant les lignes LE1 à LEn venant des modules, relié à l'entrée d'un registre à décalage R1 commandé par le signal h2 à travers une porte ET P1. La sortie parallèle du registre R1 est reliée à l'entrée d'un registre R2 à travers des portes ET P2. Les portes P1 et P2 sont validées par le circuit CD1. Le circuit d'émission EM comporte un registre à décalage R3 dont l'entrée parallèle est reliée à la sortie du registre R2 à travers une porte ET P3 validée par le signal h2 et un signal X. Le circuit AD1 est constitué par un démultiplexeur DX1 dont les sorties sont reliées aux lignes de sélection Lx1 à Lsn par les modules. Les données permettant l'adressage des jonctions dans les modules sont stockées dans un registre à décalage R4 du circuit AD1 qui reçoit sur son entrée d'horloge les signaux X et h2 à travers une porte ET Po et dont l'entrée de données est maintenue à 0. La sortie de ce registre est reliée à l'entrée du démultiplexeur DX1 par une bascule B2 pilotée par le signal h2 et validée en sortie du circuit CD1. Des sorties du décodeur DC1 sont reliées aux entrées d'adressage des circuits MX1 et DX1 et à un groupe de portes ET P4 relié à l'entrée parallèle du registre R4. Les portes P4 sont validées par des signaux X et h2. L'entrée d'horloge du registre REC est pilotée par le signal h2 à travers une porte P5 validée en sortie du circuit CD1.

Le circuit d'émission EM comporte un circuit à portes OU PO1 permettant le passage des différents signaux vers l'unité de gestion à travers des portes ET contrôlées par les circuits CA1 ou CD1: une porte P6 reliée à la sortie du registre REC contrôlée par le circuit CD1 pour l'envoi du compte-rendu de libération, une porte P7 reliée à la sortie du registre RR et contrôlée par le circuit CD1 pour l'envoi de l'accusé de réception de prise, une porte P8 pour l'envoi des données à contrôler validées par le circuit CA1, et une porte P9 permettant l'envoi de l'accusé de réception à partir d'un circuit IE, et validé par le circuit CA1.

Les données à contrôler sont stockées dans le registre R3. La sortie de ce registre est reliée à la porte P8 à travers une bascule B3 pilotée par le signal h1 et un registre à décalage R5. Le registre R5 reçoit sur son entrée d'horloge le signal h1 à travers une porte P10 validée par le circuit CA1. D'autre par l'entrée parallèle du registre R5 est reliée au circuit CD1.

L'interface ECH avec l'équipement d'injection et d'échantillonnage IE permet le prélèvement de l'échantillon de la voie temporelle contrôlée à l'entrée du réseau ou en sortie du générateur de tonalité.

Dans la réalisation décrite un bâti BA1 comporte 4 commutateurs temporels, et on a affecté un circuit IE à chaque commutateur temporel. Les liaisons entre le circuit de prélèvement PE et les circuits IE sont réalisées par un multiplexeur MX2 à 4 entrées IE1 à IE4 provenant des 4 circuits IE, et un démultiplexeur DX2 à 4 sorties IS1 à IS4 vers les 4 circuits IE. Les circuits MX2 et DX2 sont adressés à un numéro de commutateur NC, et sont validés dans le premier bit reçu du code FD. Ce bit est transmis de la sortie du registre RR aux circuits MX2 et DX2 à travers un registre R6 et une porte P11 validée à la fois par le signal h2 et par les circuits CA1 et CD1. La zone ZD du message est émise vers le registre RE d'équipement d'injection et d'échantillonnage IE (figures 2 et 6) à travers le registre RR, une bascule B4 pilotée par le front descendant du signal h2 et le démultiplexeur DX2.

La sortie du circuit MX2 est reliée d'une part à l'entrée du registre R3, et d'autre part à la porte P9 à travers une bascule B5 pilotée par le signal h2.

Enfin le groupe de portes PO1 est relié à la sortie S vers l'unité de gestion à travers une bascule B6 pilotée par le front descendant du signal h2.

L'équipement IE a une structure générale semblable à celle des équipements de prélèvement PE (figure 6). L'entrée EA est reliée au registre d'échanges RE. Des circuits CA2 et CD2 ont des fonctions analogues aux circuits CA1 et CD1 du circuit de prélèvement. Le registre RE est piloté par le signal h2 validé par le circuit CD2 à travers une porte P12. Le circuit d'émission EMA de la figure 2 comporte un registre de sortie RS, dont la sortie est reliée à travers une porte ET P13 validée par le circuit CA2 à l'entrée d'un groupe de portes OU PO2 qui a un rôle analogue à celui des portes PO1. La sortie des portes PO2 est reliée à la sortie S1 vers l'équipement de prélèvement PE à travers une bascule B7 validée en même temps que la bascule B6. L'accusé de réception est émis par réinjection du signal de prise reçu à l'entrée EA, à travers une bascule B8 validée par le signal h2 et une porte P14 commandée par le circuit CD2 et reliée aux portes PO2. Un signal de prise pr et un signal d'accusé de libération al sont émis directement par le circuit CD2 vers les portes P02. Le circuit d'accès AC2 comporte un multiplexeur MX3 relié à un registre à décalage R7 par l'intermédiaire d'un aiguilleur AI1 (c'est-à-dire un multiplexeur à 2 entrées). Dans la réalisation décrite, un commutateur temporel reçoit 16 MIC organisés en 4 modules, et un générateur de tonalité GT. Une liaison provenant des 4 modules est reliée à l'entrée du multiplexeur MX3 adressé par 2 bits du mot VD. L'aiguilleur AI1 donne accès au registre R7 soit à partir du multiplexeur, soit à partir du générateur de tonalité GT, et il est adressé par un bit du mot FD. En sortie vers les modules des commutateurs temporels, le circuit d'adressage AD2 comporte 3 démultiplexeurs DX3, DX4, DX5. Le démultiplexeur DX3 est un démultiplexeur double qui permet d'émettre par des liaisons 2 fils vers les modules LA1 à LA4, 2 éléments binaires du mot VD permettant de sélectionner un MIC parmi 4 affectés au module. Le démultiplexeur DX4 à 4 sorties IN1 à IN4 permet d'envoyer vers le module adressé un ordre d'injection d'un code de contrôle. Le démultiplexeur DX5 permet d'envoyer en série le code de contrôle vers le module sélectionné. Les circuits MX3 et DX3 à DX5 sont adressés par les 2 bits du mot VD destiné à la sélection du module.

La suite de la description concerne les moyens d'analyse ou d'injection d'un échantillon sur une voie temporelle en phases avec le MIC entrant et de transmission d'un échantillon reçu aux circuits d'analyse en phases avec la base de temps locale. D'une manière connue le dispositif de synchronisation SY récupère pour chacun des MIC entrant le signal d'échantillonnage w et un signal de synchronisation de trames s. On se reportera par exemple à l'article de la revue "Commutation et Electronique" N° 34 de Juillet 1971, pages 11 à 14. Ces signaux sont récupérés dans chaque module par des multiplexeurs MX4 et MX5 adressés en même temps que le multiplexeur MX3. Des aiguilleurs AI2 et AI3 adressés en même temps que l'aiguilleur AI1 permettent de recevoir ces signaux ou les signaux correspondants de la base de temps locale suivant que le contrôle s'effectue au niveau des commutateurs d'entrées ou du générateur de tonalités.

La synchronisation du système avec la voie à contrôler est réalisée au niveau d'un compteur CR d'une capacité de 8 bits permettant sur les 5 bits de poids forts d'adresser la voie temporelle à contrôler, et sur les 3 bits de poids faibles d'adresser séquentiellement chacun des bits de cette voie. L'opération consiste à charger le compteur avec le complément à 32 du numéro de la voie à contrôler au moment du passage du signal de synchronisation de trames. De cette manière le compteur reviendra à 0 au moment du passage de la voie à contrôler. Pour cela, un groupe de portes ET P15 validé en sortie de l'aiguilleur AI2 reçoit le numéro de voie des mots VD à travers un groupe d'inverseurs I (5 bits complétés sur les 3 poids faibles par des 0). Le code à injecter est câblé sur les entrées c0 à c7 d'un multiplexeur MX6 adressé par les poids faibles du compteur CR. Le passage à 0 du compteur est détecté par un décodeur DC2 dont la sortie émet un signal à travers une porte P16 vers l'entrée du multiplexeur DX4 et vers l'entrée de validation d'une porte P17 donnant accès au démultiplexeur DX5. La porte P16 est validée par un bit du mot FD indiquant un contrôle actif c'est-à-dire avec injection d'un échantillon. Pour renforcer l'efficacité du contrôle actif, on émet alternativement le code c0 à c7 et le code inverse. Pour cela la sortie du multiplexeur MX6 est reliée à l'entrée de la porte P17 par une porte OU exclusif PX. La seconde entrée de la porte PX est reliée à la sortie du décodeur DC2 à travers une bascule B9 montée en compteur à 2 positions.

L'échantillon reçu sur les lignes entrants LT1 à LT4 ou GT est chargé dans le registre R7 au rythme des signaux w ou h2, reçus à travers une porte P18 validée en sortie du décodeur DC2.

Le transfert des données du registre R7 dans le registre RS du circuit d'émission est réalisé par une porte P19 qui est validée par un dispositif permettant d'éviter les interférences entre le chargement du registre R7 réalisé suivant l'horloge du MIC entrant, et le chargement du registre RS qui est réalisé par une commande de l'horloge locale qui peut avoir une position quelconque par rapport à l'horloge du MIC entrant. Ce dispositif comporte:

— une bascule B10 dont l'entrée d'horloge est reliée à la sortie du décodeur DC2 à travers un inverseur I2, et dont l'entrée de données est validée par une fenêtre temporelle F délivrée par le circuit CA2,

— un aiguilleur AI4 adressé en sortie de la bascule B10, et pouvant laisser passer l'un ou l'autre de 2 fronts d'horloge X1, X2 délivrés par le circuit CA2, la sortie de cet aiguilleur valide la porte P19.

Le signal X1 est au milieu de la fenêtre temporelle F, et le signal X2 est extérieur. De cette manière, après le passage de la voie temporelle contrôlée lorsque la sortie du décodeur DC2 revient à l'état 0, si l'on est en dehors de la fenêtre F le transfert se fera en X1 et si l'on est dans la fenêtre F il s'effectuera en X2.

La largeur de la fenêtre F est telle que l'unité de gestion peut demander par un seul message le contrôle sur un très grand nombre de trames successives même s'il y a une dérive importante de l'horloge distante par rapport à l'horloge locale.

Le transfert de l'échantillon du registre RS dans le registre R3 du circuit de prélèvement est commandé à partir d'un temps tt fourni par le circuit de commande CD2 et postérieur aux instants X1 et X2, et au rythme du signal h2, transmis par une porte P20.

## Fonctionnement

Les échanges d'informations du système avec l'unité de gestion se font en synchronisme avec l'horloge locale. Le fonctionnement est le même dans le cas où les opérations de début et de fin de chaîne se font dans le même bâti ou dans des bâtis différents. Dans le cas de bâtis différents, l'unité de gestion envoie un message vers le système de contrôle de chaque bâti et chaque système n'utilise qu'une des zones ZD ou ZF du message.

— Message de prise: l'unité de gestion envoie directement sur l'entrée E le message à traiter, zone NC en tête. Dès remplissage du registre RR et simultanément du registre R6, les circuits MX2 et DX2 sont validés et les informations en série pénètrent simultanément dans les registres RE et REC au rythme des signaux h2. Simultanément le message est rebouclé vers l'unité de gestion: d'abord la zone ZD (dans les bascules B8 et B7, le multiplexeur MX2, les bascules B5 et B6) puis la zone ZF (par la porte P7 et la bascule B6).

Lorsque la zone ZD est chargée dans le registre RE, le circuit CD2 bloque la porte P14, et envoie au circuit d'analyse un signal de prise en charge pt. En même temps le circuit CD2 bloque l'entrée du registre RE à travers la porte P12, et les circuits d'accès et d'adressage sont positionnés.

Au passage du signal de synchronisation de trames (s1 à sn ou sl) le compteur CR est chargé avec l'inverse du numéro de voie. Le contrôle actif ou passif en début de chaine s'effectue comme décrit ci-dessus.

De la même manière dans le circuit de prélèvement, à la fin de la réception de la zone ZF, le circuit CD1 bloque la porte P5 d'accès au registre REC. Le décodage des parties VF et FF permet le positionnement des circuits MX1 et DX1 et le chargement du registre R4. Il n'y a pas de problèmes de resynchronisation, puisque la récupération de l'échantillon à contrôler dans le registre R1 et son transfert dans le registre R2 s'effectue en temps local. Cependant la validation du chargement de ces registres étant faite par le circuit CD1, doit évidemment tenir compte du point du réseau de connexion où s'effectue le contrôle du fait des durées de transfert et de traitement dans le réseau de connexion. Le circuit CD1 élabore donc d'une manière qu'il n'est pas nécessaire de décrire, les signaux de validation successive des portes P1 et P2, à partir des signaux de la base de temps Bt et du code FF de la zone ZF qui indique l'étage du réseau de connexion où doit être effectué le contrôle.

— Compte-rendu: le message de compte-rendu émis systématiquement à chaque instant t16 (figure 4) comporte les éléments suivants émis en série:

— un code de reconnaissance chargé par le circuit CD1 dans le registre R5. Ce code indique que le message de compte-rendu comporte ou non les échantillons prélevés en début et fin de chaîne. Les éléments nécessaires au circuit CD1 pour établir ce code sont le code FF et le signal pr transmis par le circuit d'injection et d'échantillonnage.
— l'échantillon contrôlé en fin de chaîne: cet échantillon contenu dans le registre R3 est émis à travers la bascule B3, le registre R5 et la porte P8.
— l'échantillon prélevé en début de chaîne contenu dans le registre RS est transféré dans le registre R3 lorsque l'échantillon prélevé en fin de chaîne a été émis.
— Compte-rendu de libération cl: le signal de libération lib émis par l'unité de gestion est transmis à partir de l'entrée E du système vers le circuit CD1 et vers le circuit CD2 (par le démultiplexeur DX2, la bascule B8). En réponse à ce signal les circuits CD1 et CD2 débloquent d'une part les portes d'accès aux registres REC et RE (portes P5 et P12), et d'autre part autorisent l'accès aux liaisons cl, ac, al. A partir de cet instant les 2 registres REC et RE progressent simultanément au rythme des signaux h2 grâce à une zone vide qui donne au registre RE la même capacité qu'au registre REC, et le message initial est retourné à l'unité de gestion: d'abord la zone ZD (par la liaison al, le multiplexeur MX2, la bascule B5 et la porte P9 validée par le signal X pendant le temps nécessaire au vidage du registre RE), plus la zone ZF (par la porte P6 validée par le circuit CD1 dès le blocage de la porte P9).

Ce dispositif permet à l'unité de gestion de contrôler la bonne réception du message par l'équipement de prélèvement PET et l'équipement d'injection IE.

## Revendications

1. Système de contrôle du réseau de connexion temporel d'un autocommutateur commandé par un organe central programmé pour connecter entre elles des liaisons multiplex temporelles (MIC) entrantes et sortantes synchronisées, ledit système de contrôle assurant une vérification des chemins temporairement établis entre liaisons multiplex à travers les sous-ensembles, tels que commutateurs temporels (CT) et commutateurs spatiaux (CS), du réseau de connexion par injection d'échantillons en des points d'injection (i) situés en entrée du réseau de connexion, par prélèvement d'échantillons en des points d'analyse (a), répartis et associés aux sous-ensembles, ledit système de contrôle étant caractérisé en ce qu'il comporte au moins un équipement d'injection et d'échantillonnage (IE) relié à une pluralité de points d'injection (i) et de points d'analyse (a) positionnés en amont de circuits (SY) de synchronisation des liaisons multiplex entrantes et au moins un équipement de prélèvement d'échantillons (PE) relié à une pluralité de points d'analyse (a) situés dans le réseau de connexion en aval des circuits de synchronisation (SY) chacun des équipements de prélèvement (PE)· ou d'injection et d'échantillonnage (IE) comportant respectivement un registre d'échanges (REC ou RE) qui reçoit, sous forme de messages via une unité de gestion programmée (UG) les ordres de prélèvement et d'injection émanant de l'organe central programmé, un circuit d'adressage (AD1 ou AD2) relié par ses entrées au registre d'échanges de l'équipement qui le comporte pour la sélection des différents points d'analyse et/ou d'injection reliés audit équipement, un circuit d'acquisition d'échantillons (AC1 ou AC2) pour recueillir temporairement un échantillon prélevé en un point d'analyse sélectionné par le circuit d'adressage dudit équipement, un circuit d'émission (EM, EMA) pour transmettre tout échantillon, contenu dans le circuit d'acquisition dudit équipement sous forme de message vers l'organe central programmé, via l'unité de gestion.

2. Système de contrôle selon la revendication 1, caractérisé en ce que les équipements de prélèvement d'échantillons (PE) et d'injection et d'échantillonnage (IE) comportent respectivement chacun pour la gestion des échanges de message avec l'unité de gestion (UG) un circuit de commande (CD1 ou CD2) relié par ses entrées au registre d'échanges de l'équipement qui le comporte et à un circuit cadenceur (CA1 ou CA2) recevant des signaux d'horloge d'une base de temps locale (BT), chaque circuit de commande contrôlant le circuit d'émission dudit équipement.

3. Système de contrôle selon la revendication 2, caractérisé en ce que chaque équipement d'injection et d'échantillonnage (IE) comporte un compteur (CR) pour contrôler l'injection et le prélèvement d'échantillons par l'équipement en fonction du rang de la voie à contrôler sur une liaison multiplex entrante, dite de l'équipement, sur laquelle sont deux points d'analyse et d'injection de cet équipement, ledit compteur étant relié par ses entrées d'une part au registre d'échange (RE) de l'équipement pour recevoir des données de chargement fonction du rang de la voie à contrôler, d'autre part aux circuits de synchronisation (SY) de chacune des liaisons multiplex entrantes de l'équipement pour se synchroniser sur la liaison multiplex comportant la voie à contrôler, ledit compteur étant relié par ses sorties d'une part à un multiplexeur (DX5) donnant un accès sélectif aux points d'injection de l'équipement selon l'adressage fourni à ce multiplexeur par le registre d'échange (RE) de l'équipement, de manière à contrôler l'injection en série d'un échantillon prédéterminé dans une voie à contrôler, via le point d'injection situé sur la liaison multiplex qui la comporte, d'autre part à un registre (R7) pour la mise en mémoire temporaire d'un échantillon prélevé sur une voie à contrôler d'une liaison multiplex entrante de l'équipement reliée à ce registre via un multiplexeur (MX3) lui-même relié aux points d'analyse situés sur les liaisons multiplex entrantes de l'équipement et lui-même adressé par le registre d'échange (RE) de l'équipement.

4. Système de contrôle selon la revendication 3, caractérisé en ce que l'équipement d'injection et d'échantillonnage (IE) comporte un multiplexeur (MX6) recevant l'échantillon à injecter, ledit multiplexeur étant adressé par le compteur (CR), des deux multiplexeurs (DX4, DX5) permettant d'envoyer respectivement l'ordre d'injection (IN1 à IN4) fourni par le compteur (CR) et l'échantillon à injecter vers une liaison multiplex temporelle (MIC) sélectionnée.

5. Système de contrôle selon la revendication 4, caractérisé en ce que la sortie du multiplexeur (MX6) est relié à une entrée d'une porte (EX) de type OU exclusif dont une autre entrée est reliée en sortie du compteur (CR) à travers un compteur binaire à deux portes (B9), de manière à assurer une inversion de l'échantillon injecté après chaque injection.

6. Système de contrôle selon la revendication 1, caractérisé en ce que le circuit d'acquisition d'échantillon (AC2) d'un équipement d'injection et d'échantillonnage (IE) comporte un multiplexeur (MX3) dont les entrées sont reliées aux liaisons multiplex temporelles entrantes desservies par ledit équipement (IE) et dont la sortie est reliée à un registre de stockage d'échantillon (R7) lui-même relié à un autre registre de stockage (RS) alimentant le circuit d'émission (EMA), l'ensemble étant placé sous le contrôle du circuit d'adressage (AD2) et d'un circuit cadenceur (CA2) dudit équipement (IE).

7. Système de contrôle selon la revendication 6, dans lequel les tonalités destinées aux liaisons multiplex sortantes sont émises par un générateur numérique (GT) relié au réseau de connexion, caractérisé par le fait que au moins un circuit d'acquisition d'échantillon (AC2) d'équipement d'injection et d'échantillonnage (IE) comporte un multiplexeur (AI1) de prélèvement d'échantillon relié en sortie du générateur numérique et contrôlé par des multiplexeurs de sélection (AT1, AT2) de signaux de synchronisation (s1, s2) en phase avec ledit générateur, ledit multiplexeur de prélèvement (AI1) étant relié en entrée du registre de stockage d'échantillon (R7) du circuit d'acquisition qui le comporte.

## Patentansprüche

1. System zur Prüfung eines Zeitschalt-Koppelfelds in einer Selbstwählvermittlungsanlage, das durch ein programmiertes Zentralorgan gesteuert wird und Verbindungen zwischen eingehenden PCM-Zeitmultiplexleitungen und damit synchronisierten ausgehenden PCM-Zeitmultiplexleitungen herstellt, wobei das Prüfungssystem die kurzzeitig zwischen Multiplexleitungen durch die Unterbaugruppen des Koppelfelds wie Zwitschalter (CT) und Raumschalter (CS) erstellten Pfade durch Einspeisung von Proben an Einspeisepunkten (i) am Eingang des Koppelfelds und durch Entnahme von Probem an verteilten und den Unterbaugruppen zugeordneten Analysepunkten (a) verifiziert, dadurch gekennzeichnet, daß mindestens eine Einspeise- und Probenbildungsvorrichtung (IE) an eine Merhzahl von Einspeisepunkten (i) und Analysepunkten (a) oberhalb von Synchronisationsschaltkreisen (SY) der eingehenden Multiplexleitungen angeschlossen ist und mindestens eine Probeentnahmevorrichtung (PE) an eine Mehrzahl von Analysepunkten (a), die im Koppelfeld hinter den Synchronisationsschaltkreisen (SY) liegen, angeschlossen ist, wobei jede der Probeentnahme- oder Einspeise- und Probenbildungsvorrichtung (PE bzw. IE) aufweist

— ein Austauschregister (REC oder RE), das in Form von Nachrichten über eine programmierte Steuereinheit (UG) die Entnahme- und Einspeisebefehle empfängt, die vom programmierbaren Zentralorgan kommen,

— einen Adressierschaltkreis (AD1 oder AD2), dessen Eingänge an das Austauschregister der Vorrichtung, die diesen Kreis enthält, angeschlossen sind zur Auswahl der verschiedenen mit dieser Vorrichtung verbundenen Analyse- und/oder Einspeisepunkte,

— einen Probeaufnahmeschaltkreis (AC1 oder AC2), um eine an einem von Adressierschaltkreis der Vorrichtung ausgewählten Analysepunkt abgenommene Probe kurzzeitig zu übernehmen,

— einen Sendeschaltkreis (EM, EMA), um jede Probe, die im Aufnahmeschaltkreis der Vorrichtung vorliegt, in Form einer Nachricht zum programmierten Zentralorgan über die Steuereinheit zu übertragen.

2. System zur Prüfung nach Anspruch 1, dadurch gekennzeichnet, daß die Probenentnahmevorrichtungen (PE) und die Einspeise- und Probebildungsvorrichtungen (IE) je für die Abwicklung des Austausches der Nachrichten mit der Steuereinheit (UG) einen Steuerschaltkreis (CD1 oder CD2) aufweisen, dessen Eingänge an das Austauschregister der Vorrichtung, die diesen Schaltkreis enthält, und an einen Taktschaltkreis (CA1 oder CA2) angeschlossen sind, der Taktsignale von einem lokalen Basistakt zugeführt erhält, wobei jeder Steuerschaltkreis den Senderschaltkreis der Vorrichtung steuert.

3. System zur Prüfung nach Anspruch 2, dadurch gekennzeichnet, daß jede Einspeise- und Probebildungsvorrichtung (IE) einen Zähler (CR) zur Steuerung der Einspeisung und der Probenentnahme durch die Vorrichtung abhängig vom Rang des zu überprüfenden Kanals auf der eingehenden Multiplexleitung, Vorrichtungsleitung genannt, zu kontrollieren, wobei sich auf dieser Leitung zwei Analyse- und Einspeisepunkte dieser Vorrichtung befinden und die Eingänge des Zählers einerseits an das Austauschregister (RE) der Vorrichtung zum Empfang der Ladedaten abhängig vom Rang des zu überprüfenden Kanals und andererseits an die Synchronisationsschaltkreise (SY) jeder eingehenden Multiplexleitung der Vorrichtung angeschlossen sind, um sich auf die den zu überprüfenden Kanal enthaltende Multiplexleitung zu synchroniseren, während die Ausgänge des Zählers einerseits mit einem Multiplexer (DX5), der selektiven Zugang zu den Einspeisepunkten der Vorrichtung gemäß der an diesen Multiplexer vom Austaschregister (RE) der Vorrichtung gelieferten Adressierung verschafft, damit in Reihe die Einspeisung einer vorbestimmten Probe in einen zu überprüfenden Kanal über den auf der diesen Kanal enthaltenden Multiplexleitung befindlichen Einspeisepunkt überprüft werden kann, und andererseits mit einem Register (R7) für die kurzzeitige Einspeicherung einer von einem zu überprüfenden Kanal einer eingehenden Multiplexleitung der Vorrichtung entnommenen Probe verbunden ist, wobei diese eingehende Multiplexleitung mit diesem Register über einen Multiplexer (MX3) verbunden ist, der seinerseits an die auf den eingehenden Multiplexleitungen der Vorrichtung liegende Analysepunkte angeschlossen ist, und der Multiplexer vom Austauschregister (RE) der Vorrichtung adressiert wird.

4. System zur Prüfung nach Anspruch 3, dadurch gekennzeichnet, daß die Einspeise- und Probebildungsvorrichtung (IE) einen Multiplexer (MX6) enthält, der die einzuspeisende Probe empfängt und vom Zähler (CR) adressiert wird, und daß zwei Multiplexer (DX4, DX5) den vom Zähler (CR) gelieferten Einspeisebefehl (IN1 bis IN4) bzw. die einzuspeisende Probe an die ausgewählte PCM-Zeitmultiplexleitung senden.

5. System zur Prüfung nach Anspruch 4, dadurch gekennzeichnet, daß der Ausgang des Multiplexers (MX6) mit einem Eingang eines Tores (EX) vom Type Exklusiv-ODER verbunden ist, dessen anderer Eingang mit einem Ausgang des Zählers (CR) über einen Binärzähler mit zwei Toren (B9) so verbunden ist, daß eine Umkehr jeder eingespeisten Probe nach jeder Einspeisung erfolgt.

6. System zur Prüfung nach Anspruch 1, dadurch gekennzeichnet, daß der Probeaufnahmeschaltkreis (AC2) einer Einspeise- und Probebildungsvorrichtung (IE) einen Multiplexer (MX3) enthält, dessen Eingänge an die eingehenden und von der Vorrichtung (IE) betreuten Zeitmultiplexleitungen angeschlossen sind und dessen Ausgang an ein Probenspeicherregister (R7) führt, das seinerseits an ein anderes, den Sendeschaltkreis (EMA) speisendes Speicherregister (RS) führt, wobei das Ganze vom Adressierschaltkreis (AD2) und vom Taktschaltkreis (CA2) der Vorrichtung (IE) kontrolliert wird.

7. System zur Prüfung nach Anspruch 6, in dem die Rufsignale, die für die ausgehenden Multiplexleitungen bestimmt sind, von einem digitalen Generator (GT) ausgesandt werden, der mit dem Koppelfeld verbunden ist, dadurch gekennzeichnet, daß mindestens ein Probeaufnahmeschaltkreis (AC2) der Vorrichtung zur Einspeisung und Probenbildung (IE) einen Multiplexer (AI1) für die Probenentnahme aufweist, dessen Ausgang an den digitalen Generator angeschlossen ist und der von den Auswahlmultiplexern (AT1, AT2) für die Synchronisationssignale (s1, s2) in Phase mit dem Generator überprüft wird, wobei der Entnahmemultiplexer (AI1) eingangsseitig an das Probenspeicherregister (R7) des diesen Multiplexer enthaltenden Probenaufnahmeschaltkreises angeschlossen ist.

## Claims

1. A test system for a time division switching network of an automatic exchange device controlled by a programmed central means, the device being conceived to connect PCM time division multiplex input and synchronized output links, the test system verifying the switchpaths which are temporarily set up between multiplex links through the subunits of the switching network such as time switches (CT) and space switches (CS), by means of the injection of samples into the links at injection points (i) disposed at the input of the switching network, and by means of the retrieval of samples at spaced-out analysis points (a) associated to the subunits, characterized in that it comprises at least one injection and sampling equipment (IE) connected to a plurality of injection points (i) and analysis points (a) which are located upstream of synchronization circuits (SY) of the multiplex input links and comprises at least one sample retrieval equipment (PE) connected to a plurality of analysis points (a) which are located downstream of the synchronization circuits (SY), each retrieval or injection and sampling equipment (PE or IE) comprising respectively

— an exchange register (REC or RE) receiving in message form via a programmed management unit (UG) the orders of retrieval or injection from the programmed central means,
— an addressing circuit (AD1 or AD2), the inputs of which are connected to the exchange register of the equipment to which it belongs, for the selection of the different analysis and/or injection points connected to said equipment,
— a sample receiver circuit (AC1 or AC2) for receiving temporarily a sample which was retrieved from an analysis point selected by the addressing circuit of said equipment,
— an emission circuit (EM, EMA) for transmitting every sample contained in the receiver circuit of said equipment in message form to the programmed central means via the management unit.

2. A test system according to claim 1, characterized in that the sample retrieval and injection and sampling equipments (PE or IE) each comprise respectively for the management of the message exchanges with the management unit (UG) a control circuit (CD1 or CD2), the inputs of which are connected to the exchange register of the equipment to which it belongs and to a timing circuit (CA1 or CA2) receiving clock signals from a local time base (BT), each control circuit controlling the emission circuit of said equipment.

3. A test system according to claim 2, characterized in that each injection and sampling equipment (IE) comprises a counter (CR) for controlling the injection and the retrieval of samples by the equipment in dependance of the rank of the channel under test on an input multiplex link, called equipment link, on which there are two analysis points and injection points of said equipment, the inputs of said counter being connected on the one hand to the exchange register (RE) of the equipment in order to receive charge data in dependance of the rank of the channel under test, and on the other hand to the synchronization circuits (SY) of each input multiplex link of the equipment in order to be synchronized to the multiplex link containing the channel under test, the outputs of this counter being connected on the one hand to a multiplexer (DX5) which gives selective access to the injection points of the equipment according to the addresses furnished by the exchange register (RE) of the equipment to this multiplexer in such a way, that the injection of a predetermined sample on a channel under test is tested serially via the injection point located on the multiplex link to which it belongs, whereas on the other hand the outputs of this counter are connected to a register (R7) for temporarily storing a sample which has been withdrawn from a channel under test in an input multiplex link of the equipment, which link is connected to this register via a multiplexer (MX3) which itself is connected to the analysis points located on the input multiplex links of the equipment and addressed itself by the exchange register (RE) of the equipment.

4. A test system according to claim 3, characterized in that the injection and sampling equipment (IE) comprises a multiplexer (MX6) which receives the sample to be injected, this multiplexer being addressed by the counter (CR), two multiplexers (DX4, DX5) being able to send respectively the injection orders (IN1 to IN4) furnished by the counter (CR) and the sample to be injected to a selected PCM time switch multiplex link.

5. A test system according to claim 4, characterized in that the output of the multiplexer (MX6) is connected to an input of an exclusive OR gate (EX), the other input of which is connected to the output of the counter (CR) through a binary counter with two gates (B9) in such a way, that an inversion of the injected samples is obtained after each injection.

6. A test system according to claim 1, characterized in that the sample receiver circuit (AC2) of an injection and sampling equipment (IE) comprises a multiplexer (MX3), the inputs of which are connected to the time division multiplex input links which are served by said equipment (IE), whereas the output of this multiplexer is connected to a sample storing register (R7) which itself is connected to another storing register (RS) feeding the emission circuit (EMA), the whole being placed under control of the addressing circuit (AC2) and of a timing circuit (CA2) of said equipment (IE).

7. A test system according to claim 6, in which the tones for the output multiplex links are emitted by a digital generator (GT) connected to the switching network, characterized in that at least one sample receiver circuit (AC2) of the injection and sampling equipment (IE) comprises a multiplexer (AI1) for retrieving samples, this multiplexer being connected to the output of the digital generator and being controlled by selection multiplexers (AT1, AT2) for synchronization signals (s1, s2) which are in phase with said generator, the retrieval multiplexer (AI1) being connected to the input of the sample storing register (R7) of the retrieval circuit to which it belongs.

# FIG.1

# FIG.2

# FIG. 3

# FIG. 4

# FIG.5

FIG.6

0 027 226